# EUROPEAN PATENT APPLICATION

(11) **EP 0 851 658 A2**
(43) Date of publication of application: **01.07.1998**
(21) Application number: 97112101.7
(22) Date of filing: 15.07.1997
(51) Int. Cl.: H04N 1/04

(54) **Image scanner having variable speed and signal-to-noise dependent on requested scan resolution and data type**

(30) Priority: 27.12.1996 US 777220
(71) Applicant: Hewlett-Packard Company, Palo Alto, California 94304 (US)
(72) Inventor: Webb, Steven L., Loveland, CO 80538 (US); Johnson, Dan S., Greeley, Co 80634 (US)
(74) Representative: Schoppe, Fritz, Dipl.-Ing.

(57) **Abstract**

A scanning system in which a speed mode is selected automatically. Multiple speed modes are provided, with each speed mode resulting in a different range of signal-to-noise ratios that is appropriate for a particular operator selected data type and resolution. In a specific example embodiment, the speed modes are slow (432, 434, 436, 438), normal (420, 422, 424) and fast (418). For the slow speed mode, the scanner scans in the Y-dimension at an integral multiple of the requested resolution and averages pixels in an integral multiple of adjacent lines. N-line averaging improves the signal-to-noise by a factor of 1/(√N) at the expense of increasing the overall scan time by a factor of N. In the normal speed mode, for low resolution color or gray scale scanning, exposure time per line is reduced, thereby increasing scanning speed, and signal-to-noise is restored by merging (adding) adjacent pixels. For binary scanning, fast scanning is implemented by reducing exposure time to one third the normal exposure time, resulting in an acceptable lower signal-to-noise but with a corresponding reduced scan time.

## Description

### FIELD OF INVENTION

This invention relates generally to electronic image scanners and copiers and more specifically to a method of providing a range of scanning speeds, each with a different range of signal-to-noise ratios, dependent on operator selected options.

### BACKGROUND OF THE INVENTION

Electronic image scanners and copiers convert an optical image into an electronic form suitable for storage, transmission or printing. In general, there is an ongoing demand for increased resolution, increased speed, improved color quality, improved image quality, and reduced cost; demands that often directly conflict and require trade-offs. The invention deals with speed, resolution and image quality (signal-to-noise) trade-offs. The following background presents some of the factors affecting resolution, speed, and image quality.

In a typical image scanner or copier, light from an image is focused onto linear arrays of photosensors for scanning one line at a time. A two dimensional image is scanned by providing relative movement between the linear sensor arrays and the original image. In the present patent document, the rate of relative movement between the sensor arrays and the image being scanned is called "sweep speed." For gray-scale scanning there may be only a single linear array of photosensors. In general, a color scanner or copier measures the intensity of at least three relatively narrow bands of wavelengths of visible light, for example, bands of red, green and blue. A color scanner may sequentially present multiple bands of wavelengths to a single row of sensor elements by sequentially moving color filters into the light path or by sequentially activating different colored light sources. For higher speed, a color scanner may simultaneously present multiple bands of wavelengths to multiple rows of sensor elements.

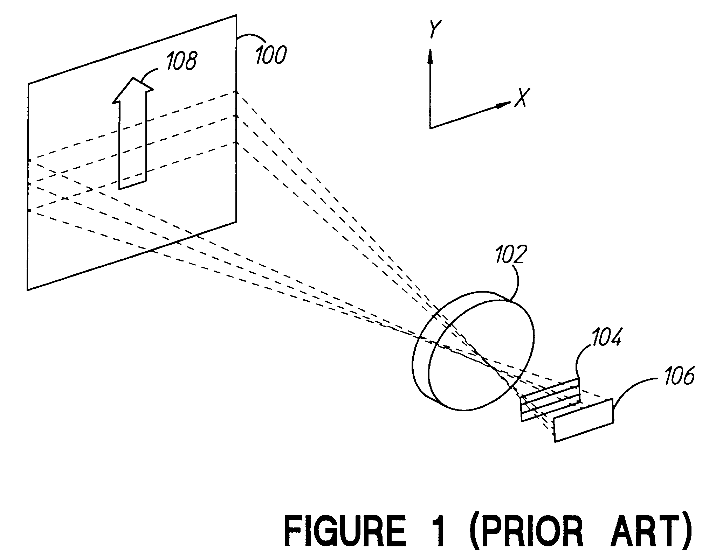

Figure 1 illustrates a typical color scanning assembly for an image scanner or copier using filters. Light reflects from the surface of an opaque document 100 or, alternatively, light is transmitted through a transparent document 100. An optics assembly 102 focuses light from three separate lines on the document 100, through color filters 104, and onto a three-line photosensor array 106. Typically, the light path is folded by mirrors (not illustrated). An entire image is scanned by providing relative movement between the document 100 and the photosensor array 106 (relative movement in the Y-dimension as illustrated by the arrow 108).

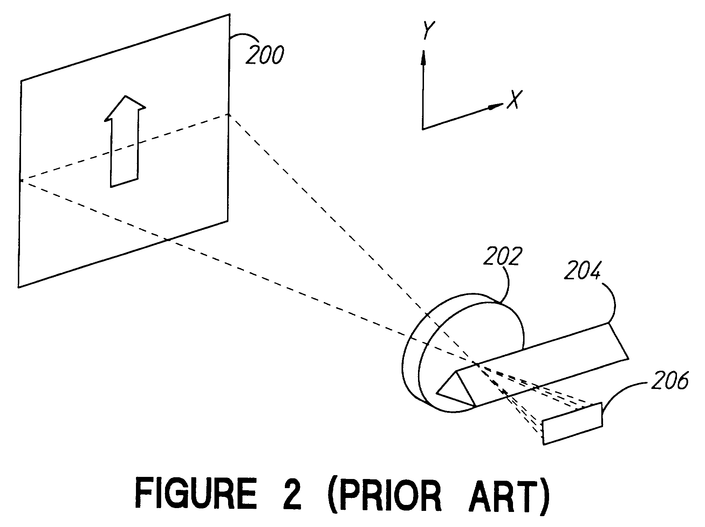

Figure 2 illustrates an alternative color scanning assembly using a beam splitter. An optics assembly 202 focuses light from a single line on document 200, through a beam splitter 204 that splits the light into three relatively narrow bands of wavelengths, each band focused onto a different linear array on a three line photosensor array 206.

In the configuration illustrated in figure 2, for any one line on the document 200, intensity measurements for all colors are made simultaneously. For the configuration illustrated in figure 1, for any one line on the document 100, intensity of one color is measured, then at a later time intensity of a second color is measured, and then at a later time intensity of a third color is measured. Therefore, in the configuration illustrated in figure 1, memory is required to buffer intensity measurements for a line on the scanned image until the final measurements are completed for that line.

Photosensor arrays 106 and 206 typically have thousands of individual photosensitive elements. Each photosensitive element, in conjunction with the scanner optics assemblies (102, 202), measures light intensity from an effective area on the document (100, 200) defining a picture element (pixel) on the image being scanned. Scanning resolution is often expressed as pixels per inch (or mm) as measured on the image being scanned. The resolution defined by the optics and the individual photosensitive elements is called the "native" resolution. Additional pixels may be inserted by interpolation, creating a higher "effective" resolution. Lower resolutions may be obtained by dropping selected pixels, called decimation, or by averaging two or more adjacent pixel values.

Many imaging devices permit an operator to specify a scan at any arbitrary resolution within a range, with independent X and Y resolutions. Typically, for the X-dimension (see figures 1 and 2), any resolution other than the native resolution is accomplished by interpolation, decimation and averaging. In the Y-dimension, resolution is typically determined by exposing the photosensors at a constant rate (exposure time per line is constant) and adjusting the speed of relative motion (sweep speed) so that the image relative to the photosensors moves a distance of 1/resolution in one exposure time. Y-resolution may be increased by decreasing the sweep speed, decreasing the exposure time per line, or both. Y-resolution may be decreased by increasing the sweep speed, increasing the exposure time per line, or both. However, the systems providing relative motion have an upper limit on speed. At low resolutions, the system may have to move the image relative to the photosensors at the maximum speed and drop lines (decimation) to achieve the desired resolution.

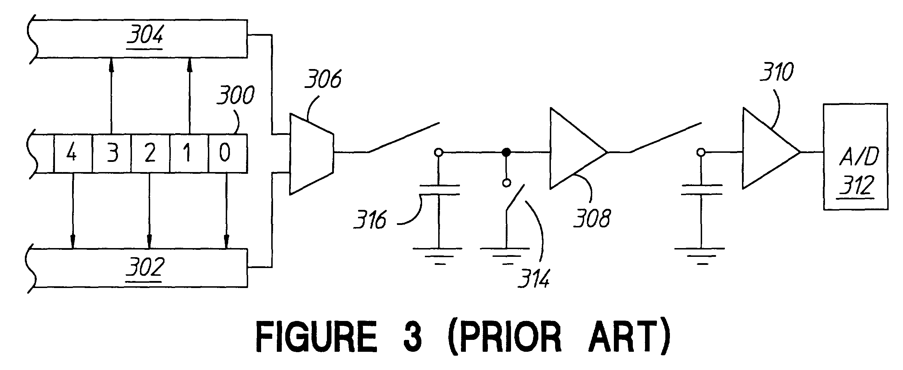

Charge coupled devices (CCD's) are frequently used for the sensing elements of photosensor arrays. Figure 3 illustrates one row of a typical prior art CCD array. A row of CCD elements 300 is electrically connected on either side to analog shift registers 302 and 304. After exposing the CCD elements to light, charges are transferred from the CCD elements to the analog shift registers (302, 304) where they are serially shifted "bucket-brigade" style into charge multiplexer 306, amplifiers (308, 310) and an analog-to-digital converter (A/D) (312). Electric charges from even numbered CCD elements in row 300 are transferred to shift register 302 and electric charges from odd numbered CCD elements in row 300 are transferred to shift register 304.

For maximum signal-to-noise for any one CCD element, the maximum expected light intensity at the CCD should almost saturate the CCD. Scanning time per line is determined by the exposure time required to almost saturate each CCD element at the maximum intensity. Charge shifting and A/D conversion for one line occur in parallel with exposure of the next line. Typically, the time required to shift and convert all the charges is less than the exposure time. If pixels are to be dropped (decimation), it is possible to increase the speed of scanning with little impact on the signal-to-noise by adding charges from adjacent CCD elements. For example, if the requested resolution is half the native resolution, the exposure time may be halved and CCD charges may then be added for adjacent pairs of CCD elements. In figure 3, capacitor 316 receives a series of charges from analog shift registers 302 and 304. Switch 314 may be closed after each charge to discharge capacitor 316 before receiving the next serial charge. Alternatively, if switch 314 is controlled to remain open, two or more charges received by capacitor 316 accumulate. This is described in more detail in U.S. Patent Number 5,461,491 (Degi).

Recall from the discussion above that a low resolution in the Y-dimension may require a sweep speed that exceeds the maximum sweep speed of the scanner. In particular, with charge adding as described in Degi, a low X-resolution may result in a short exposure time, that in turn results in a required sweep speed that exceeds the maximum sweep speed of the scanner, thereby requiring line decimation as the only way to provide the specified Y-resolution. Rather than drop lines, it may be preferable to increase the exposure time. These tradeoffs are described in more detail in U.S. Patent Number 5,489,772 (Webb *et al*).

Another parameter of interest in digitized images is the number of bits per pixel after digitization. If gray scale or color image intensities are accurately digitized to 16 levels (4 bits per pixel), steps in intensity (contours) and other digitization artifacts may be perceptible in the resulting printed or displayed images. If image intensities are accurately digitized to 256 levels (8 bits per pixel), there may still be perceptible digitizing artifacts in the dark areas and shadow areas. The human visual system is approximately logarithmic. That is, the human visual system is very sensitive to intensity changes in dark areas and shadow areas and the sensitivity to intensity change decreases with increasing intensity. If images are accurately digitized to 1024 levels (10 bits per pixel), artifacts due to digitization are essentially invisible to the human visual system. Additional bits per pixel provide additional margin for round-off error in binary arithmetic in image processing.

Digitization artifacts may also be a function of the type of image being scanned. A film transparency or continuous-tone printed photograph may have a much larger dynamic range of intensity than a half-tone image. In general, continuous tone images need more bits per pixel than half-tone images or spot color graphics such as pie charts and bar chants. Some images, for example, line art and printed text, are inherently binary (black and white) and only two bits per pixel are needed. However, even for binary images, operations such as optical character recognition may be improved if edge sharpening and other image processing is performed on multiple bits per pixel before thresholding is used to generate pure binary data. Therefore, it is useful to scan binary images with more than two bits per pixel.

The final image parameter of interest in the present patent document is noise. Images obtained by image scanners generally have some unavoidable noise. Photosensors have a finite background signal level even when no light is received by the photosensors (sometimes called fog level or dark current). There may be thermal noise, synchronous electronic noise, and quantization banding due to limited precision in analog-to-digital conversion. Also, sensitivity (voltage change/light intensity) varies from photosensor element to photosensor element. In general, image scanners perform calibration processes to reduce the effects of background (dark) signals and variable sensitivity, but calibration rarely completely eliminates variability.

In general, the goal of the speed/resolution tradeoffs discussed in Degi and Webb *et al* is to always provide the highest possible speed for any specified resolution. The trade-offs may also affect signal-to-noise. However, in some circumstances, image quality (bits per pixel and signal-to-noise) may be more important than speed. In other circumstances, speed may be more important than image quality. There is a need for a scanning system providing additional flexibility by providing a capability for choosing among various combinations of signal-to-noise, bits per pixel, resolution, and speed.

### SUMMARY OF THE INVENTION

In a specific example embodiment, a scanning system operator selects resolution and data type (binary non-dither, binary dither, or color/grayscale along with bits per pixel). A speed mode is then selected automatically, providing a range of signal-to-noise ratios that is appropriate for the operator selected data type. The speed modes are slow, normal and fast. For the slow speed mode, the scanner scans in the Y-dimension at an integral multiple of the requested resolution and averages pixels in an integral multiple of adjacent lines. N-line averaging improves the signal-to-noise by a factor of 1/(√N) at the expense of increasing the overall scan time by a factor of N. In the normal speed mode, for low resolution color or gray scale scanning, adjacent pixels are added in the X-dimension (as in Degi) to reduce exposure time per line. For binary scanning, fast scanning is implemented by reducing exposure time to one third the normal exposure time, resulting in an acceptable lower signal-to-noise but with a corresponding reduced scan time.

### BRIEF DESCRIPTION OF THE DRAWINGS

Figure 1 (prior art) is a block diagram perspective view of a line scanning system with filters.
Figure 2 (prior art) is a block diagram perspective view of a line scanning system with a beam splitter.
Figure 3 (prior art) is a block diagram schematic of a CCD array with associated electronics.
Figure 4A is a flow chart of a method in accordance with the invention.
Figure 4B is a continuation of the flow chart of figure 4A.

### DETAILED DESCRIPTION OF THE PREFERRED EMBODIMENT OF THE INVENTION

In a specific example embodiment of the invention, a scanning system operator is permitted to classify an image being scanned into one of four data categories: binary non-dither, binary dither, 8 bits per pixel, and 10 or more bits per pixel. Binary non-dither images such as line art and text may be scanned at one bit per pixel or four bits per pixel. Binary dither images are images that have been printed by binary printers using dither patterns to simulate levels of gray. In addition to selecting an image category, the scanning system operator either directly or indirectly selects a resolution in the X and Y dimensions. For example, an operator may specify that an original image is to be scaled to fit an area of a target document, and the scaling process may require corresponding scanning resolutions in the X and Y dimensions. Alternatively, an operator may specify a resolution lower than the native resolution just to reduce the memory requirements for the resulting digitized image.

In the specific example embodiment, the scanning system automatically selects one of three speed modes, called slow, normal, and fast, depending on the image classification and Y-resolution. In the slow speed mode, the primary goal is to maximize the signal-to-noise ratio. In the fast speed mode, the primary goal is to maximize speed.

Noise may be reduced by averaging. An image may be digitized multiple times with multiple successive values of each pixel averaged. Alternatively, adjacent pixel values may be averaged, reducing resolution. Averaging N pixel values, whether it is the same pixel N times or N different adjacent pixel values, reduces random noise by a factor of 1/(√N). Averaging may also be viewed as a low pass filter. Images have spatial frequency information. For example, images may include patterns. A specific example is patterns of dots in half-tone printed images. Periodic sampling of spatial patterns may produce aliasing if the spatial sampling frequency is less than twice the highest spatial frequency in the image being sampled. Therefore, images may need to be low-pass filtered before being sampled. In particular, decimation, whether in the X-dimension or Y-dimension may introduce aliasing artifacts if the digitized image is not appropriately filtered. Averaging, as a form of low pass filtering, may reduce aliasing artifacts due to decimation.

As stated above, the primary goal in the slow speed mode is to maximize the signal-to-noise ratio. Accordingly, pixel averaging is used to reduce noise in the slow speed mode if the Y-resolution is less than half the native resolution. In the slow speed mode, the sweep rate is slowed to generate a Y-resolution that is N times the requested Y-resolution, where N is at least 2. N lines are then averaged to produce the requested Y-resolution. In the specific example embodiment, N can be 2, 4 or 8. In the specific example embodiment, the slow speed mode is selected for color or gray scale images with 10 bits or more per pixel and also for color or gray scale images with 8 bits per pixel having a specified Y-resolution that is greater than half the native resolution.

As stated above, the primary goal in the fast speed mode is to maximize speed. In the specific example embodiment, the fast speed mode is used only for binary images. In the specific example embodiment, binary (non-dither) images may be scanned at one bit per pixel or four bits per pixel. For either binary (non-dither) selection, the signal-to-noise requirements are greatly reduced. The signal-to-noise ratio for binary images may be reduced to one third of the signal-to-noise ration of images requiring 8 or 10 bits per pixel, and still provide acceptable results. Most binary images are black lines or text on a light background, but some binary images may also be various colors. In the specific example embodiment, for binary images, a single color channel may be used, for example, green. The exposure time per line is reduced to one third of the exposure time required to almost saturate CCD elements for the maximum expected intensity. Therefore, the signal-to-noise ratio is reduced, but the sweep rate is then increased by a factor of three, providing a scan time that is three times faster than the time required for fully saturated CCD elements.

In the normal speed mode, the goal is to maximize speed for any specified resolution, but speed is reduced as necessary to prevent requiring decimation in the Y-dimension. The trade-offs are as discussed in Webb *et al*. For low resolutions in the X-dimension, the exposure time per line is reduced and adjacent pixels are averaged, with little impact on signal-to-noise. In the specific example embodiment, if short exposure times might require decimation in the Y-dimension, exposure times are extended to prevent Y decimation and no Y-dimension averaging is provided. As an alternative embodiment, Y-dimension averaging, as used in the slow mode discussed above, can be used instead of increased exposure time to prevent the need for decimation in the Y-dimension. The normal speed mode is used for binary dither images and for 8 bit per pixel color or gray scale images having Y-dimension resolutions less than half the native resolution.

In the specific example embodiment, native resolution is 300 pixels per inch (12 pixels per mm). The normal speed mode is automatically selected for color or gray scale images with 8 bits per pixel having a Y-dimension resolution of 150 pixels per inch (6 pixels per mm) or less. The slow speed mode is automatically selected for images with 10 or more bits per pixel and for color or gray scale images with 8 bits per pixel having a Y-dimension resolution greater than 150 pixels per inch (6 pixels per mm).

The following table illustrates the automatic selection of speed modes.

| DATA TYPE | EFFECTIVE Y RESOLUTION | AUTOMATIC SPEED MODE |
|---|---|---|
| Binary (1 or 4 bits/pixel) | 12 - 600 | Fast |
| Binary dither | 12 - 600 | Normal |
| 8 bits/pixel | 12 - 150 | Normal |
| 8 bits/pixel | 151 - 600 | Slow |
| ≥ 10 bits/pixel | 12 - 600 | Slow |

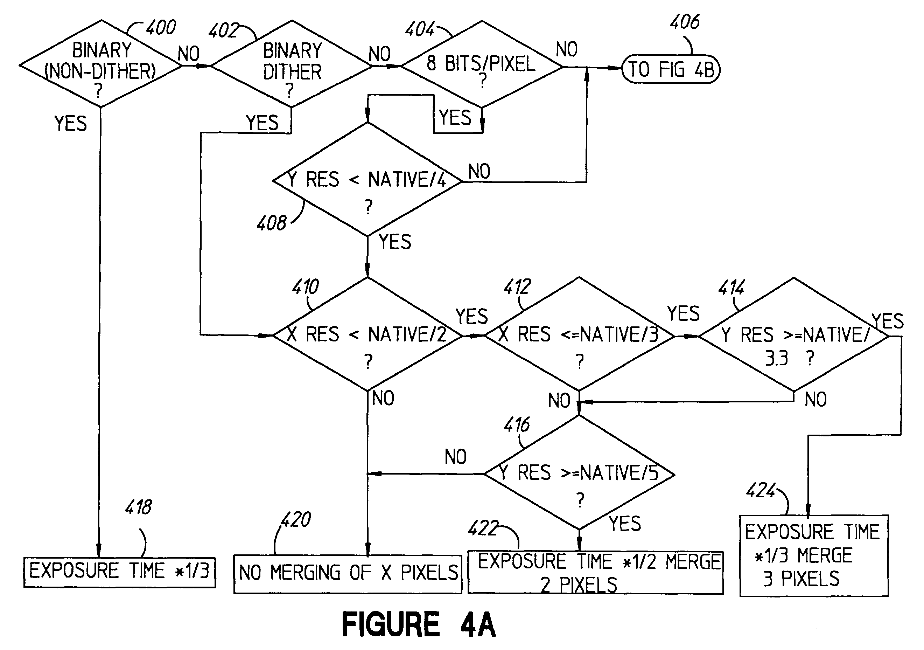

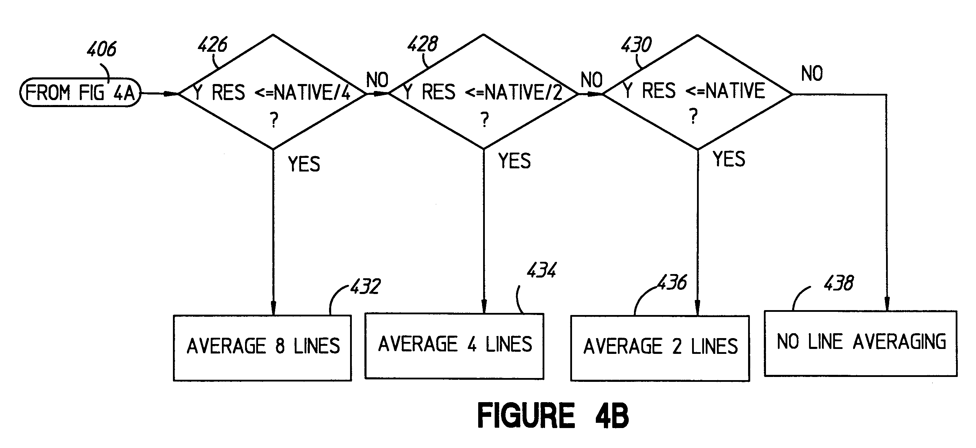

Figures 4A and 4B illustrate the overall method. In figure 4A, if the data type is binary non-dither (decision 400), then fast speed is selected and the exposure time is reduced by one third (box 418). If the data type is binary dither (decision 402) or if the data type is 8 bits per pixel (decision 404) and Y-dimension resolution is less than half the native resolution, then normal speed is selected. In normal speed, as disclosed in Webb *et al*, at low resolutions in the X-dimension, up to three pixels may be merged, but only if the corresponding requirements in the Y-dimension result in a Y sweep speed that is below a maximum sweep speed. In figure 4A, if the X-resolution is greater than half the native resolution (decision 410), no merging of pixels occurs. If the X-resolution is less than half the native resolution but greater than one third the native resolution, X-dimension pixels may be merged in pairs (box 422) if the Y-resolution is greater than one fifth of the native resolution (decision 416). If the X-resolution is less than one third the native resolution (decision 412), X-dimension pixels may be merged two at a time (box 422) or three at a time (box 424), depending on the Y-resolution (decisions 414 and 416). If the data type is 10 or more bits per pixel (decision 404) or if the data type is 8 bits per pixel with a Y-resolution greater then one fourth of the native resolution (decision 408), figure 4B is used. In figure 4B, if the Y-resolution is less than one fourth the native resolution (decision 426), the sweep rate is increased by a factor of 8 and every 8 consecutive lines are averaged to form one line of pixel data (box 432). If the Y-resolution is greater than one fourth but less than half the native resolution, the sweep rate is increased by a factor of four and every 4 consecutive lines are averaged to form one line of pixel data (box 438). If the Y-resolution is greater than half but less than the native resolution (decision 430), the sweep rate is doubled and every 2 consecutive lines are averaged to form one line of pixel data (box 436). If the Y-resolution is greater than the native resolution, the sweep rate is doubled and interpolation provided, but no line averaging is performed (box 438).

Let S be the sweep rate for an 8 bit per pixel scan with X and Y resolutions equal to the native resolution (box 420). The fast speed mode (box 418) is 3S, the normal speed mode is S, 2S or 3S (boxes 420, 422, 424 respectively) and the slow speed mode is S/8, S/4, S/2 or S (boxes 432, 434, 436, and 438 respectively).

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of varying a sweep speed of an imaging device, the imaging device providing numerical values representing light intensity from pixels, the method comprising the following steps:
choosing (400) a normal sweep speed (420, 422, 424) when a first data type is selected; and
choosing a faster sweep speed (418) than the normal sweep speed when a second data type is selected, the faster sweep speed reducing a signal-to-noise ratio for each pixel relative to the normal sweep speed.

2. The method of claim 1, the faster sweep speed including reducing an exposure time for each pixel.

3. The method of claim 1 further comprising the following step:
choosing a slower sweep speed (432, 434, 436, 438) than the normal sweep speed when a third data type is selected, the slower sweep speed increasing the signal-to-noise ratio for each pixel relative to the normal sweep speed.

4. The method of claim 3, the slower sweep speed including averaging multiple lines of numerical values to produce one line of numerical values.

5. A method of varying a sweep speed of an imaging device, the imaging device providing numerical values representing light intensity from pixels, the method comprising the following steps:
choosing (400) a normal sweep speed (420, 422, 424) when a first data type is selected; and
choosing a slower sweep speed (432, 434, 436, 438) than the normal sweep speed when a second data type is selected, the slower sweep speed increasing a signal-to-noise ratio for each pixel relative to the normal sweep speed.

6. The method of claim 5, the slower sweep speed including averaging multiple lines of numerical values to produce one line of numerical values.
